# EUROPÄISCHE PATENTSCHRIFT

(11) **EP 2 695 797 B1**
(45) Veröffentlichungstag und Bekanntmachung des Hinweises auf die Patenterteilung: **27.04.2016**
(21) Anmeldenummer: 13003846.6
(22) Anmeldetag: 01.08.2013
(51) Int. Cl.: B62D 15/02, G05D 1/02, G08G 1/00

(54) **Verfahren zum fahrerlosen Bewegen eines Fahrzeugs auf einer Parkfläche**
Method for driverless movement of a vehicle on a parking lot
Procédé pour le déplacement sans conducteur d'un véhicule sur une aire de stationnement

(30) Priorität: 11.08.2012 DE 102012015968
(43) Veröffentlichungstag der Anmeldung: 12.02.2014
(73) Patentinhaber: AUDI AG, 85045 Ingolstadt (DE)
(72) Erfinder: Reichel, Michael, DE - 85049 Ingolstadt (DE); Bouzouraa, Mohamed Essayed, DE - 85051 Ingolstadt (DE)
(74) Vertreter: Thielmann, Frank

(56) Entgegenhaltungen:
- WO-A1-2006/092370
- DE-A1-102007 021 405
- JP-A- 2006 306 233
- US-A- 5 815 093
- US-A1- 2010 156 672
- US-A1- 2012 188 100
- US-B1- 6 389 340

## Beschreibung

Die Erfindung betrifft ein Verfahren zum fahrerlosen Bewegen eines Fahrzeugs auf einer Parkfläche, mit einer externen, ortsfest auf oder in der Nähe der Parkfläche angeordneten Steuerungseinrichtung, der ein Zugriff auf das Fahrzeug ermöglicht wird, um dieses zu oder von einem zugewiesenen Stellplatz der Parkfläche zu steuern.

Es sind bereits Fahrzeuge erhältlich, die einen Einparkassistenten aufweisen, mit dessen Hilfe ein Fahrzeug in eine Parklücke oder aus einer Parklücke gesteuert werden kann. Diese automatisierten Parkvorgänge laufen unter Überwachung des Fahrers ab, der bestimmte Aktionen auslöst. Zu diesen Aktionen gehört eine aktive Betätigung eines Fahrzeugschlüssels sowie des Gas- oder Bremspedals.

Derzeit werden Verfahren zum autonomen Parken entwickelt, bei denen der Fahrer nicht mehr aktiv eingreifen muss. Stattdessen ist vorgesehen, dass ein Fahrzeug fahrerlos auf einer Parkfläche durch eine externe Steuerungseinrichtung bewegt wird. Beispiele für derartige Parkflächen sind abgeschlossene Bereiche wie ein Parkhaus oder ein Parkplatz, in oder auf dem sich keine Personen aufhalten. Diese Bereiche dienen als Fahr- und Parkfläche für fahrerlos bewegte Fahrzeuge ohne Insassen.

Aus der DE 10 2007 021 405 A1 ist ein Verfahren und eine Vorrichtung zur Überwachung eines parkenden Fahrzeugs bekannt. Dabei ist vorgesehen, dass um ein parkendes Fahrzeug ein Sicherheitsbereich definiert wird. Wenn der Abstand eines sich nähernden Objekts, insbesondere eines anderen Fahrzeugs, einen vorgegebenen Schwellwert unterschreitet, wird ein Warnsignal ausgelöst. Gegebenenfalls werden weitere Aktionen ausgelöst, um einen Unfall oder eine Beschädigung des parkenden Fahrzeugs zu dokumentieren.

Die Druckschrift US 2010/0156672 A1 offenbart ein Verfahren zum fahrerlosen Bewegen eines Fahrzeugs auf einer Parkfläche mit den Merkmalen des Oberbegriffs des Anspruchs 1. Das Verfahren kann z. B. in einem Parkhaus eingesetzt werden. Mittels mehrerer Sensoren wird ein Bewegungsweg für ein Fahrzeug bestimmt. Wenn während des automatischen Parkens ein Hindernis erfasst wird, wird ein geänderter Bewegungsweg festgelegt. Auf diese Weise soll eine Kollision beim fahrerlosen Bewegen vermieden werden.

Ein Verfahren zum autonomen Parken, das heißt ein Verfahren zum fahrerlosen Bewegen eines Fahrzeugs auf einer Parkfläche, wird sich nur dann durchsetzen, wenn eine bessere Flächennutzung im Vergleich zum herkömmlichen Parken, bei dem der Fahrer sein Fahrzeug selbst parkt, erzielt werden kann. Zudem muss sichergestellt sein, dass leichte und schwere Kollisionen erfasst und dokumentiert werden. Derartige Zwischenfälle können nicht vollständig ausgeschlossen sein, da auf der Parkfläche Fahrzeuge mit unterschiedlicher technischer Ausstattung bewegt werden.

Der Erfindung liegt daher die Aufgabe zugrunde, ein Verfahren zum sicheren fahrerlosen Bewegen eines Fahrzeugs auf einer Parkfläche anzugeben.

Zur Lösung dieser Aufgabe ist ein Verfahren der eingangs genannten Art mit den folgenden Schritten vorgesehen: Detektieren einer stattgefundenen Kollision mit einem anderen fahrenden oder parkenden Fahrzeug mittels wenigstens eines Sensors des von der externen Steuerungseinrichtung gesteuerten Fahrzeugs, Auswerten von Sensordaten in einer Auswerteeinheit, situationsabhängiges Treffen einer Verhaltensentscheidung durch die Steuerungseinrichtung, indem Maßnahmen zur Dokumentation der stattgefundenen Kollision und zur Information durchgeführt werden.

Das erfindungsgemäße Verfahren beruht auf dem Detektieren einer drohenden oder bereits stattgefundenen Kollision zwischen einem fahrenden Fahrzeug, wobei das Detektieren von der externen Steuerungseinrichtung gesteuert wird, und einem parkenden Fahrzeug. Als Sensoren werden vorzugsweise bordeigene Sensoren des fahrenden Fahrzeugs benutzt, die Bestandteil von Fahrerassistenzsystemen sind. Beispiele für derartige Sensoren sind ein Ultraschallsensor, ein Lasersensor, ein Radarsensor, laufzeitmessende optische Sensoren (PMD), eine Kamera für die Aufnahme von Videosequenzen mit entsprechenden Auswertealgorithmen sowie Sensoren zum Verhindern oder Erkennen eines Diebstahls. Die von dem jeweiligen Sensor oder mehreren Sensoren erzeugten Sensordaten werden an eine Auswerteeinheit übermittelt, die Bestandteil der externen Steuerungseinrichtung ist. Vorzugsweise ist die externe Steuerungseinrichtung ortsfest auf oder in der Nähe der Parkfläche angeordnet, es sind jedoch auch andere Ausführungsbeispiele denkbar, bei denen die externe Steuerungseinrichtung weit entfernt von der Parkfläche angeordnet ist, so dass die Sensordaten von der Parkfläche an die externe Steuerungseinrichtung über eine Kommunikationsverbindung übertragen werden.

Erfindungsgemäß ist vorgesehen, dass die Sensordaten in der Auswerteeinheit ausgewertet werden. Anschließend wird von der externen Steuerungseinrichtung situationsabhängig eine Verhaltensentscheidung getroffen, um eine der Situation angepasste Aktion auszulösen. Falls bereits eine Kollision stattgefunden hat, werden Maßnahmen zur Dokumentation und Information eingeleitet. Dabei steht die Dokumentation eines stattgefundenen Unfalls im Vordergrund, gegebenenfalls auch die Schadensbegrenzung.

Bei dem erfindungsgemäßen Verfahren kann es vorgesehen sein, dass das Treffen der Verhaltensentscheidung das Ausgeben eines Warn- oder Alarmsignals umfasst. Dieses Warn- oder Alarmsignal führt dazu, dass ein anderes Fahrzeug auf das von der externen Steuerungseinrichtung bewegte Fahrzeug aufmerksam gemacht wird. Auf diese Weise kann gegebenenfalls auch das andere Fahrzeug eine bevorstehende Kollision erkennen und gegebenenfalls automatisch Aktionen zur Unfallvermeidung einleiten. Das Warn- oder Alarmsignal kann beispielsweise durch Blinken, Hupen, ein Lichtsignal oder ein Funksignal erfolgen. Sämtliche Signale können auch kombiniert abgegeben werden. Alternativ oder zusätzlich kann das Treffen der Verhaltensentscheidung auch das Bewegen des Fahrzeugs durch die externe Steuerungseinrichtung umfassen. Auf diese Weise kann ein fahrendes oder stehendes Fahrzeug aus einem Gefahrenbereich bewegt werden, bevor es zu einer Kollision mit einem anderen fahrenden Fahrzeug kommt.

Gemäß einer Weiterbildung des erfindungsgemäßen Verfahrens kann es vorgesehen sein, dass eine Aufzeichnungseinheit vorgesehen ist, durch die Sensordaten und/oder ausgewertete Sensordaten und /oder Verhaltensentscheidungen und/oder sonstige für das Verfahren relevante Daten aufgezeichnet werden. Mittels der Aufzeichnungseinheit können nach einem Unfall Maßnahmen zur Dokumentation und Information durchgeführt werden. Primär werden fahrzeugeigene Sensorsignale und gegebenenfalls weitere Kennwerte wie Zeit, Ort usw. festgehalten. Zusätzlich kann das Treffen der Verhaltensentscheidung bei dem erfindungsgemäßen Verfahren die Benachrichtigung eines Besitzers eines Fahrzeugs und/oder eines Aufsichts- oder Servicemitarbeiters umfassen. In ähnlicher Weise können andere Verkehrsteilnehmer oder andere Dienstleister wie ein Reparatur- oder Abschleppservice oder andere Stellen informiert werden. Die Aufzeichnungseinheit kann entweder im Fahrzeug angeordnet sein, alternativ kann sie Bestandteil der externen Steuerungseinrichtung sein.

Gemäß einer Weiterbildung des erfindungsgemäßen Verfahrens kann es vorgesehen sein, dass das Treffen der Verhaltensentscheidung den Übergang eines an der stattgefundenen Kollision beteiligten Fahrzeugs in einen sicheren Zustand umfasst, insbesondere durch Abbremsen des Fahrzeugs, gegebenenfalls bis zum Stillstand. Die externe Steuerungseinrichtung ist dabei so konfiguriert, dass versucht wird, eine weitere Gefährdung beziehungsweise Beschädigung von Fahrzeugen zu vermeiden.

Weitere Vorteile und Einzelheiten der Erfindung werden nachfolgend anhand eines Ausführungsbeispiels unter Bezugnahme auf die Zeichnungen erläutert. Die Zeichnungen sind schematische Darstellungen und zeigen:
- Fig. 1: ein fahrerlos auf einer Parkfläche bewegbares Fahrzeug; und
- Fig. 2: eine Situation bei der Durchführung des erfindungsgemäßen Verfahrens.

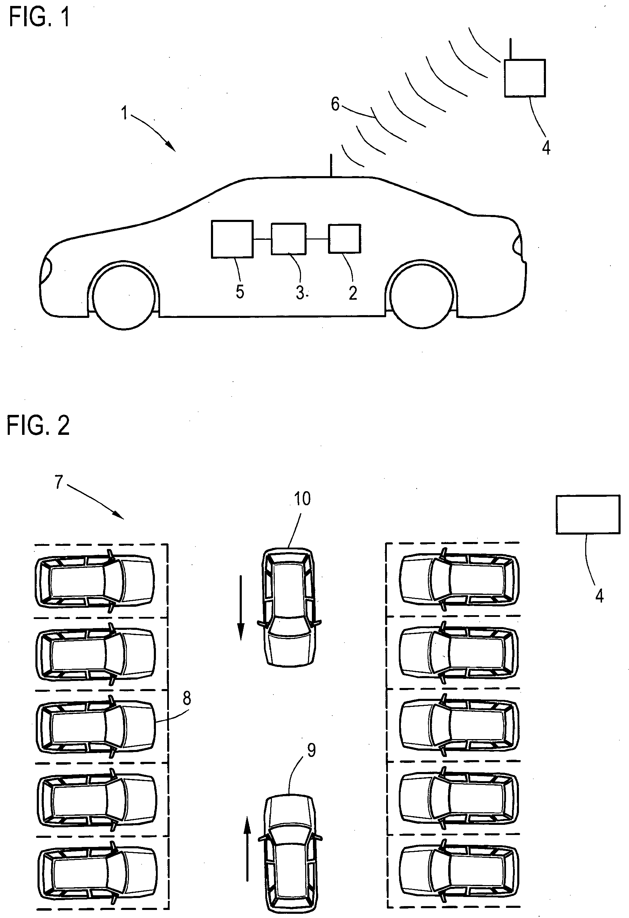

Das in Fig. 1 gezeigte Fahrzeug 1 umfasst mehrere Sensoren 2, die für die Überwachung des Umfelds des Fahrzeugs 1 vorgesehen sind. Die Sensoren 2 sind mit einer Auswerteeinheit 3 gekoppelt, die als fahrzeugeigene Auswerteeinheit 3 ausgebildet ist. Die ausgewerteten Sensordaten werden an eine externe Steuerungseinrichtung 4 übermittelt, die dazu ausgebildet ist, eine Verhaltensentscheidung in Abhängigkeit der von der Auswerteeinheit 3 erhaltenen Sensordaten durchzuführen. Die Auswerteeinheit 3 ist mit einer im Fahrzeug 1 vorgesehenen Kommunikationseinrichtung 5 gekoppelt, die mit der externen Steuerungseinrichtung 4 zum Austausch von Daten und Informationen über eine drahtlose Kommunikationsverbindung 6 verbunden werden kann.

Der externen Steuerungseinrichtung 4 kann ein Zugriff auf das Fahrzeug 1 ermöglicht werden, um dieses zu oder von einem zugewiesenen Stellplatz der Parkfläche zu steuern. Da das Bewegen der mehreren Fahrzeuge 1 autonom, das heißt fahrerlos erfolgt, kann die zur Verfügung stehende Fläche besser ausgenutzt werden im Vergleich zu einer herkömmlichen Parkfläche, auf der das Parken von den Fahrern gesteuert wird. Beim autonomen Parken ist das Öffnen von Türen oder Klappen nicht erforderlich, dementsprechend können die einzelnen Fahrzeuge besonders dicht mit geringem Abstand zueinander geparkt werden.

Fig. 2 zeigt eine Situation bei der Durchführung des Verfahrens zum fahrerlosen Bewegen eines Fahrzeugs auf einer Parkfläche.

Fig. 2 ist eine Draufsicht und zeigt eine Parkfläche 7, auf der eine große Anzahl von Fahrzeugen 8 geparkt ist. Die Bewegung der einzelnen Fahrzeuge auf der Parkfläche 7 erfolgt autonom, mittels der externen Steuerungseinrichtung 4, der ein Zugriff auf die einzelnen Fahrzeuge ermöglicht wird, um die Fahrzeuge zu oder von einem zugewiesenen Stellplatz zu steuern.

In Fig. 2 erkennt man, dass sich zwei Fahrzeuge 9, 10 auf der Parkfläche 7 bewegen, die Bewegungsrichtung wird dabei jeweils durch einen Pfeil dargestellt. Die beiden Fahrzeuge 9, 10 befinden sich auf einem Kollisionskurs, das heißt, die Trajektorien berühren einander.

Die Sensoren in dem Fahrzeug 9 erfassen dessen Umfeld, so dass das sich nähernde Fahrzeug 10 erfasst wird. Nach dem Auswerten der Sensordaten in der Auswerteeinheit wird die externe Steuerungseinrichtung 4 informiert, die eine situationsabhängige Verhaltensentscheidung trifft. In dem dargestellten Fall bremst die externe Steuerungseinrichtung 4 das Fahrzeug 9 ab, gleichzeitig werden Warnsignale in Form von optischen Signalen und Funksignalen ausgegeben, die von dem Fahrzeug 10 empfangen werden können. Das Fahrzeug 10 weist ebenfalls Sensoren zur Umfeldüberwachung und einer Auswerteeinheit auf. Da es sich jedoch um einen anderen Fahrzeugtyp eines anderen Fahrzeugherstellers handelt, unterscheiden sich die beiden Fahrzeuge 9, 10 hinsichtlich der Geschwindigkeit der Erkennung einer gefährlichen Situation. Das Fahrzeug 10 sendet ebenfalls Informationen an die externe Steuerungseinrichtung 4, die eine situationsabhängige Verhaltensentscheidung bezüglich des Fahrzeugs 10 trifft. In diesem Fall wird auch das Fahrzeug 10 abgebremst, anschließend legt die externe Steuerungseinrichtung 4 eine geänderte Streckenführung fest, so dass eine Kollision der Fahrzeuge 9, 10 vermieden wird.

## Patentansprüche

1. Verfahren zum fahrerlosen Bewegen eines Fahrzeugs auf einer Parkfläche, mit einer externen, ortsfest auf oder in der Nähe der Parkfläche angeordneten Steuerungseinrichtung, der ein Zugriff auf das Fahrzeug ermöglicht wird, um dieses autonom zu oder von einem zugewiesenen Stellplatz der Parkfläche zu steuern,
**gekennzeichnet durch** die folgenden Schritte:
- Detektieren einer stattgefundenen Kollision mit einem anderen fahrenden oder parkenden Fahrzeug mittels wenigstens eines Sensors des von der externen Steuerungseinrichtung gesteuerten Fahrzeugs;
- Auswerten von Sensordaten in einer Auswerteeinheit;
- situationsabhängiges Treffen einer Verhaltensentscheidung **durch** die Steuerungseinrichtung, indem Maßnahmen zur Dokumentation der stattgefundenen Kollision und zur Information durchgeführt werden.

2. Verfahren nach Anspruch 1,
**dadurch gekennzeichnet,**
**dass** das Treffen der Verhaltensentscheidung das Ausgeben eines Warn- oder Alarmsignals umfasst.

3. Verfahren nach Anspruch 2,
**dadurch gekennzeichnet,**
**dass** das Ausgeben des Warn- oder Alarmsignals durch Blinken und/oder Hupen und/oder ein Lichtsignal und/oder ein Funksignal erfolgt.

4. Verfahren nach Anspruch 2 oder 3,
**dadurch gekennzeichnet,**
**dass** das Treffen der Verhaltensentscheidung das Bewegen des Fahrzeugs durch die externe Steuerungseinrichtung umfasst.

5. Verfahren nach einem der vorangehenden Ansprüche,
**dadurch gekennzeichnet,**
**dass** eine Aufzeichnungseinheit aufweist, durch die Sensordaten und/oder ausgewertete Sensordaten und/oder Verhaltensentscheidungen und/oder sonstige für das Verfahren relevante Daten aufgezeichnet werden.

6. Verfahren nach einem der vorangehenden Ansprüche,
**dadurch gekennzeichnet,**
**dass** das Treffen der Verhaltensentscheidung die Benachrichtigung eines Besitzers eines Fahrzeugs und/oder eines Aufsichts- oder Servicemitarbeiters umfasst.

7. Verfahren nach einem der vorangehenden Ansprüche,
**dadurch gekennzeichnet,**
**dass** das Treffen der Verhaltensentscheidung den Übergang eines an der stattgefundenen Kollision beteiligten Fahrzeugs in einen sicheren Zustand umfasst, insbesondere durch Abbremsen des Fahrzeugs, gegebenenfalls bis zum Stillstand.

## Claims

1. Process for driverless motion of a vehicle to a parking area, with an external, stationary controller arranged at or near the parking area which enables access to the vehicle in order to guide it autonomously to or from an assigned parking space of the parking area, **characterised by** the following steps:
- Detection of an occurred collision with another moving or parking vehicle by means of at least one sensor of the vehicle controlled by the external control device.
- Evaluation of sensor data by an evaluation unit.
- Situation-dependent behavioural decision carried out by the control device regarding measures for documenting the occurred collision and informing.

2. Process according to claim 1, **characterised in that**, making a behavioural decision comprises issuing a warning or alarm signal.

3. Process according to claim 2, **characterised in that**, the issue of a warning or alarm signal takes place via flashing and/or a horn and/or a light signal and/or a radio signal.

4. Process according to claim 2 or 3, **characterised in that**, making a behavioural decision includes movement of the vehicle by the external control device.

5. Process according to one of the preceding claims, **characterised in that**, a recording unit records relevant data via sensor data and/or evaluated sensor data and/or behavioural decisions and/or other processes.

6. Process according to one of the preceding claims, **characterised in that**, making a behavioural decision includes notification of an owner of a vehicle and/or a supervisory or service representative.

7. Process according to one of the preceding claims, **characterised in that**, making a behavioural decision includes transition of a vehicle involved in the occurred collision to a safe state, in particular, by slowing down the vehicle, possibly stopping it.

## Revendications

1. Procédé de déplacement sans conducteur d'un véhicule sur une aire de stationnement avec un dispositif de commande externe stationnaire aménagé sur ou au voisinage de l'aire de stationnement, auquel dispositif est permis un accès au véhicule pour commander celui-ci de manière autonome afin de l'amener à une place de stationnement de l'aire de stationnement ou de l'en sortir,
**caractérisé par** les étapes consistant à :
- détecter une collision ayant eu lieu avec un autre véhicule en circulation ou en cours de stationnement au moyen d'au moins un capteur du véhicule commandé par le dispositif de commande externe ;
- exploiter les données du capteur dans une unité d'exploitation ;
- adopter en fonction de la situation une décision de comportement via le dispositif de commande en prenant des mesures de documentation sur la collision qui s'est produite et d'information.

2. Procédé selon la revendication 1,
**caractérisé en ce que** :
l'adoption de la décision de comportement comprend la délivrance d'un signal d'avertissement ou d'alarme.

3. Procédé selon la revendication 2,
**caractérisé en ce que** :
la délivrance du signal d'avertissement ou d'alarme se fait par un clignotement et/ou un avertissement et/ou un signal lumineux et/ou un signal radio.

4. Procédé selon la revendication 2 ou la revendication 3,
**caractérisé en ce que** :
l'adoption de la décision de comportement comprend le déplacement du véhicule par le dispositif de commande externe.

5. Procédé selon l'une quelconque des revendications précédentes,
**caractérisé en ce que** :
il présente une unité d'enregistrement par laquelle sont enregistrées des données de capteur et/ou des données de capteur exploitées et/ou des décisions de comportement et/ou d'autres données importantes pour le procédé.

6. Procédé selon l'une quelconque des revendications précédentes,
**caractérisé en ce que** :
l'adoption de la décision de comportement comprend l'information du propriétaire d'un véhicule et/ou d'un employé de surveillance ou de service.

7. Procédé selon l'une quelconque des revendications précédentes,
**caractérisé en ce que** :
l'adoption de la décision de comportement comprend la mise en place d'un véhicule ayant participé à la collision qui a eu lieu dans un état sûr, en particulier par freinage du véhicule, éventuellement jusqu'à l'immobilisation.
